Europäisches Patentamt

European Patent Office

Office européen des brevets

(11) Publication number: **0 034 125**
A1

# EUROPEAN PATENT APPLICATION

(21) Application number: 81830009.7

(51) Int. Cl.³: **G 01 S 7/44**

(22) Date of filing: **20.01.81**

(30) Priority: **06.02.80 IT 4783080**

(43) Date of publication of application: **19.08.81**
**Bulletin 81/33**

(84) Designated Contracting States: **DE FR GB NL SE**

(71) Applicant: **SELENIA INDUSTRIE ELETTRONICHE ASSOCIATE S.p.A., Via Tiburtina, KM 12.4, I-00131 Roma (IT)**

(72) Inventor: **Giaccari, Ennio, Via Fogazzaro, 74, I-00100 Roma (IT)**
Inventor: **Accarino, Nicola, Via F. Fiorentini, 106, I-00100 Roma (IT)**

(54) **System for the extraction of the coordinates of a moving aircraft by means of a primary radar.**

(57) The invention refers to a new type of plot coordinates extractor to be connected to a 2-D radar.

A method based on the pattern recognition is applied in order to get an improvement in range and azimuth accuracy and resolution. The chosen algorithm of extraction is explained and a possible practical implementation is proposed.

The improvement in performance is extensively compared with the values obtained with conventional extractors.

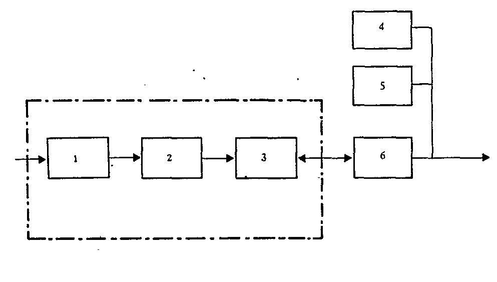

0034125

- 1 -

DESCRIPTION

The present invention refers to a system for the extraction of the coor dinates of a moving aircraft by means of a primary radar.

It is known that todays density of air traffic requires the ability of the control system to reduce the separation between the aircraft. Such a reduction requires a high degree of assurance and precision in the extraction of the coordinates of the aircrafts.

Today, good results are obtained utilizing highly specialized radar and with extraction systems integrated in the processing radar.

This invention is a result of the need to better the precision and reso lution intrinsic in radar apparatus and connected to its significant para meters of antenna beam, pulse duration, data rate, prf and sampling rate.

What is proposed operates on the data after radar elaboration on the basis of an analysis of the shape of the processed video signal.

The proposed algorithm allows the retracing with optimum precision to the true position of the aircraft and to discriminate distinct echoes that present themselves at video level without a solution of continuity.

- 2 -

This is obtained without worsening the performance of the radar in terms of sensibility (matched filter) and M T I capacity (antenna with adequate beam width).

Up to now, the extraction operation of the coordinates of an aircraft by means of a primary radar has been obtained by a device external to the radar that has the triple function of:

- quantization

- azimuth integration and target detection

- measurement of the target coordinates

The quantization is necessary because old radars do not guarantee the normalization of all the types of interferences, therefore requiring a variable detection level in order to control the number of false echoes. The azimuth integration is required because these radars are not provided with azimuthcorrelation that improves the detection capability. The measurement of the coordinates of the echo assigns to each echo the corresponding values of distance and azimuth on the basis of elementary calculations.

This external extractor, that has some validity when applied to older generation radars, suffers intrinsic limitations when connected to an adaptive radar.

These limitations derive principally from the limited capacity of the quantizer to adapt itself to all the possible types of interferences, other limitations such as the mismatching of the quantization interval should also be taken into consideration.

Present modern radar signal processors contain the quantization functions and azimuth correlation with the following principal characteristics:

- the integrated quantizer permits intervention in all the crucial points of the radar, inclusive of the RF and IF parts.
- the mismatching in terms of sampling and the use of special interfaces are completely eliminated.

Therefore, considering valid the assumption that quantization and integration are integrated in the same radar processor, only the measurement of coordinates and the discrimination between close targets has to be realized by means of an extractor.

The algorithm to calculate the exact position of the target used in conventional targets is not adequate if the requirements of precision and resolution become very stringent, as is necessary in overcrowded air spaces.

Conventional extractors are realized using real time processors whose elaboration capacity limit is the hardware complexity.

This, together with the imperfect knowledge of the detection phenomena, has limited in the past the obtainment of optimum extraction characteristics.

The availability today of adaptive processing techniques, such as the realization of sophisticated algorithms by means of microprocessors, permits a new approach to the problem of radar data extraction.

To extract supplementary information for the target coordinates the complete analysis of the echo is an element of the detection process that must be considered.

The analysis of the target center is therefore shifted from the analysis of the first "slash" received to the analysis of the entire "cluster" of slashes (see figure 1 for the definition).

A noteworthy effort has been dedicated to the realization of the best algorithm, that in the best manner possible approximates the true coordinates of the target.

- 4 -

The optimum procedure is based on the preliminary examination of the cluster configuration followed by the synthesis of an algorithm capable of arriving at the double purpose of:

- minimization of the estimated error with respect of the true position
- maximization of the resolution capacity

This algorithm takes into consideration all the radar parameters such as:

- transmitted pulse length $(\tau)$
- width of the azimuth beam $(\Theta_B)$
- pulse duration–bandwidth product $(\tau \cdot B)$
- sampling period $(t_c)$
- number of responses in the antenna beam $(N)$
- type of signal processing
- echo strength

with the essential requirement of resolving echoes that could appear superimposed.

Taking into consideration the casual position of the received echo with respect to the established sampling time, the position of the first sample is affected by an error characterized by an average valued and by an rms value that are a function of the sampling period and the signal-to noise relationship.

It has been found that the complete cluster analysis permits the determination of the true position.

Range accuracy

This algorithm is summarized in the following criteria.

To each displayed cluster are assigned three parameters for each slash of the cluster

$$(\tau_i, a_i, l_i) \qquad i = 1, 2, \ldots N$$

where:

$\tau_i$ is the initial distance of the ith slash

$\partial_i$ is the initial azimuth of the ith slash

$l_i$ is the length (in quantum of azimuth) of the ith slash

The procedure for the estimation of the true distance R is:

$$R = \tau_1 - d\left(N, t_c, \xi\right)$$

where: $\tau_1$ is the initial distance of the 1st slash

$d$ is a quantity that is a function of the numebr of slashes (N), of the sampling interval ( $t_c$ ) and of the pulse shape ( $\xi$ ). These criteria when utilized with a computer program has given the results of table 1.

TABLE 1 : RANGE ACCURACY

SIMULATION RESULTS OF THE RANGE ACCURACY FOR THE
PROPOSED AND CONVENTIONAL EXTRACTORS

| | AVERAGE VALUES | | RMS VALUES | |
|---|---|---|---|---|
| $P_D$ | PROPOSED EXTRACTOR | CONVENTIONAL EXTRACTOR | PROPOSED EXTRACTOR | CONVENTIONAL EXTRACTOR |
| 0.60 | 0 | 1.10 $\tau$ | .147 $\tau$ | .147 $\tau$ |
| 0.70 | 0 | 1.07 $\tau$ | .142 $\tau$ | .142 $\tau$ |
| 0.80 | 0 | 0.99 $\tau$ | .135 $\tau$ | .135 $\tau$ |
| 0.90 | 0 | 0.91 $\tau$ | .132 $\tau$ | .132 $\tau$ |
| 0.95 | 0 | 0.83 $\tau$ | .125 $\tau$ | .125 $\tau$ |
| 0.99 | 0 | 0.67 $\tau$ | .124 $\tau$ | .124 $\tau$ |

This table includes a comparison with the algorithm based on convention al methods.

– 6 –

The improvement obtained with the proposed algoritms is evident.
The average error is practically eliminated; while the rms error, that
depends only on the sampling period, is practically the same for the
proposed method and the conventional one.

Angular Accuracy

The proposed extraction algorithm is based on the analysis of the
"slashes" length.

$$ A = \frac{1}{T} \sum_{1}^{T} \kappa \left( a_\kappa + \frac{\ell_\kappa}{2} \right) - \frac{L}{2} $$

Where:

$A$   is the position of the estimated azimuth

$\ell_\kappa$   is the slash length in terms of azimuth quanta

$L$   is the width of the integration window expressed in azimuth
quanta (it is assumed to detect with an optimum decision thresh
old equal to $L/2$)

$T$   represents the number of slashes which exceed a prefixed
azimuth length.

TABLE II : AZIMUTH ACCURACY

SIMULATION RESULTS OF THE AZIMUTH ACCURACY FOR THE PROPOSED
AND CONVENTIONAL EXTRACTORS.

| | AVERAGE VALUES | | RMS VALUES | |
| $P_D$ | PROPOSED EXTRACTOR | CONVENTIONAL EXTRACTOR | PROPOSED EXTRACTOR | CONVENTIONAL EXTRACTOR |
|---|---|---|---|---|
| 0.60 | 0 | 0 | .081 $\Theta_B$ | .091 $\Theta_B$ |
| 0.70 | 0 | 0 | .080 $\Theta_B$ | .09 $\Theta_B$ |
| 0.80 | 0 | 0 | .072 $\Theta_B$ | .084 $\Theta_B$ |
| 0.90 | 0 | 0 | .052 $\Theta_B$ | .078 $\Theta_B$ |
| 0.95 | 0 | 0 | .044 $\Theta_B$ | .069 $\Theta_B$ |
| 0.99 | 0 | 0 | .036 $\Theta_B$ | .063 $\Theta_B$ |

In table II the average and rms error·values in azimuth are shown in percentage terms of the beam width ($\Theta_B$) for different values of $P_D$ . Table II also shows the advantages that are obtained with respect to a conventional extraction system consisting of an improvement of about 30% in the azimuthal accuracy.

Range Resolution

The principle on which is based the azimuth resolution is the analysis of the cluster shape.

Simple algorithms, that use the shape recognition technique, are used to divide in two parts a complex cluster representative of two very close targets.

Moreover, special care has been taken to avoid information losses in the position calculation of the two targets after the separation.

The basic algorithm for the separation is based on the presence of an inflection point on the extension in azimuth of the adjoining slashes (fig. 2)

The inflection is accepted if its amplitude exceeds a pre-established limit. If the result is not positive a separation is assigned even if the number of continuous slashes exceeds a pre-established limit.

This limit is determined as a function of the maximum number of continuous slashes attributable to an isolated target.

Once taken the decision to separate, two new clusters are generated. The operation is realized in such a manner that the compression error on the successive single target position evaluation is minimized.

TABLE III - RANGE RESOLUTION

COMPARISON BETWEEN THE RANGE RESOLUTION PERFORMANCE
OF THE PROPOSED AND CONVENTIONAL EXTRACTORS

| $P_D$ \\ $P_R$ | PROPOSED EXTRACTOR 0.8 | CONVENTIONAL EXTRACTOR 0.8 | PROPOSED EXTRACTOR 0.9 | CONVENTIONAL EXTRACTOR 0.9 |
|---|---|---|---|---|
| 0.8 | D=1.59 $\tau$ | D=1.91 $\tau$ | D=1.71 $\tau$ | D=2.07 $\tau$ |
| 0.9 | D=1.65 $\tau$ | D=2.10 $\tau$ | D=1.75 $\tau$ | D=2.25 $\tau$ |
| 0.99 | D=1.75 $\tau$ | D=2.41 $\tau$ | D=1.94 $\tau$ | D=2.49 $\tau$ |

CONVENTIONAL EXTRACTOR LOSSES IN TERMS OF A REDUCTION IN PR

| $P_D$ \\ $P_R$ | 0.8 | 0.9 |
|---|---|---|
| 0.8 | -042 | -049 |
| 0.9 | -0.60 | -0.69 |
| 0.99 | -0.78 | -0.88 |

Table III shows a comparison between the extractor proposed by the inventors and a conventional extractor.

For a certain value of $P_D$, part a) gives the resolution probability ($P_R$) as a function of the separation in distance ( D ), expressed in terms of transmitted pulse length.

For the proposed extractor part b) shows, for a pre-established value of $P_D$ and $P_R$ , the reduction in $P_R$ of a conventional extractor that operates in the same conditions.

- 9 -

As an example, for the typical values of $P_D = 0.9$ and $P_R = 0.9$ the new extractor resolves 63% more of the case than the conventional extractor.

Azimuth Resolution

A similar approach has been used for the separation of two targets that are adjacent in azimuth.

The example of figure 3 shows how the presence of an inflection point the range extension indicates a point of separation.

In this case the extraction of the inflection point is also taken into consideration.

The results are summarized in table IV using the same philosophy as table III.

TABLE IV : AZIMUTH RESOLUTION

COMPARISON BETWEEN THE AZIMUTH RESOLUTION PERFORMANCE OF
THE PROPOSED AND CONVENTIONAL EXTRACTORS

| $P_D$ | PROPOSED EXTRACTOR $P_R$ 0.8 | CONVENTIONAL EXTRACTOR 0.8 | PROPOSED EXTRACTOR 0.9 | CONVENTIONAL EXTRACTOR 0.9 |
|---|---|---|---|---|
| 0.80 | $\Theta = 1.20\,\Theta_B$ | $\Theta = 1.76\,\Theta_B$ | $\Theta = 1.28\,\Theta_B$ | $\Theta = 1.85\,\Theta_B$ |
| 0.90 | $\Theta = 1.06\,\Theta_B$ | $\Theta = 1.94\,\Theta_B$ | $\Theta = 1.17\,\Theta_B$ | $\Theta = 2.03\,\Theta_B$ |
| 0.99 | $\Theta = 0.88\,\Theta_B$ | $\Theta = 2.25\,\Theta_B$ | $\Theta = 0.99\,\Theta_B$ | $\Theta = 2.36\,\Theta_B$ |

CONVENTIONAL EXTRACTOR LOSSES IN TERMS OF $P_R$ REDUCTION

| $P_D$ | $P_R$ 0.8 | 0.9 |
|---|---|---|
| 0.8 | -0.42 | -0.49 |
| 0.9 | -0.60 | -0.63 |
| 0.99 | -0.78 | -0.88 |

This table shows how a reduction in azimuth separation ( $\theta$ ) of about one half of the conventional value is obtainable using the proposed algorithm for the same values of $P_D$ and. $P_R$ .

Besides the algorithms already described that work in azimuth/distance an additional calculation is performed on all the clusters that exceed a certain shape in order to decide if the best configuration which is adapted to the "cluster" corresponds to two targets separated in azimuth and distance.

The invention is described by the figures, in which figure 1 illustrates an outline of the system simulation approach, figure 2 shows an example of analysis in range of the cluster shape, figure 3 an example of analysis in azimuth of the cluster shape, and figure 4 shows a block diagram of the system.

The unit receives the antenna data from the radar, the radar synchronization signal ( $t_c$ ), and the raw video .

The unit processes the raw video with the same radar $t_c$ and does not therefore present an alignment problem with the radar.

Because ulterior filtering and integration operations are not necessary on the input video the unit directly performs the target coordinate calculations.

This calculation in the case of conventional extractors relys on the determination of the coordinates of the center of the first slash of the raw video.

In the case of the invention in question the calculation is instead executed on the basis of a sophisticated analysis of the raw video shape.

In this way are obtained:

1) Greater precision in the determination of the true target position.

2) Superior resolution power between adjacent targets, in that it relys not totally and only on the separation of the corresponding radar echoes, but on the determination in the echo, of one or more of the typical shapes of a target.

3) Minor probability to separate in more targets the echo corresponding to a single target, for the same reason as in point 2.

The description of the shape of the raw video is obtained on the basis of two parameters:

- the cluster

- the slash

For slash is meant to whole of the returns at the same distance and correlated in azimuth.

For clusters is meant the whole of the returns correlated in azimuth and range. The cluster is univocally determined by the whole of the slashes constructed with the returns that make it up.

The slash is univocally determined by:

- Distance common to the entire slash

- Azimuth of the center slash

- Extension of the slash (in number of appearances)

Figure 4 describes the functions carried out by fundamental blocks of the unit according to the invention.

Correlation of the successive video returns in real time and description of the slash (block 1).

Correlation of the slash in distance and azimuth in real time and description of the cluster (block 2).

Real time transfer of the cluster to a support memory (block 3).

The result of the process is then transferred to the processing block 4 made up of the microprocessor 6, of the memory 5 and of the interface with the direct access to the memory 7.

This performs the function of implementing the extraction algorithm
and in particular the cluster discrimination in one or more targets by
means of an analysis of the shape, by evaluation of the center of the
target so determined, by implementation of the filtering algorithm on
the basis of the quality of the signal, by formation of the output messages and the management of the input–output channels.
The invention has been described in one of its particular realized
forms but it is evident that modificazions and corrections can be made,
be it to the form of the basic algorithm as to the realization scheme of
the same without, because of this, leaving the limits of protection of
the present industrial patent right.

0034125

CLAIMS

1. A system for the extraction of the coordinates of an aircraft
   by means of a primary radar characterized by the fact that it
   includes in combination; means for the correlation of successive
   video returns in real time and for the slash description; means
   for the real time transfer of the cluster to a support memory.
   A microprocessor with a memory element and an interface with
   direct access to the memory.

2. A system for the extraction of coordinates of an aircraft according to claim 1 in which the said microprocessor performs the
   function of implementing the extraction algorithm and in particular the cluster discrimination in one or more targets by means
   of a shape analysis (evaluation of the so determined target), the
   quality assignment, implementation of the filtering algorithm on
   the basis of the quality of single data, shape attribution to the
   output messages, management of the input output channels.

3. The system according to the preceeding claims as substantially
   illustrated, claimed and described.

1/4

NUMBER
POSITION
SPEED
R C S
FLUCT. MODEL

TARGET
PARAMETER

ANTENNA SHAPE
PRF
FILTERING FUNCTION
SAMPLIG RATE
SYSTEM NOISE
DETECTION PROCESSING.

RADAR
PARAMETERS

DETECTION
PROCESSING

AZIMUTH / RANGE
QUANTUM

CLUSTER

SLASH

RANGE

AZIMUTH

FIG. 1

AZIMUTH
EXTENSION

RANGE
POSITION

10
9
8
7
6
5
4
3
2
1

1 2 3 4 5 6 7 8

target 1

target 2

FIG. 2

0034125

target 1

target 2

AZIMUTH
POSITION

RANGE
EXTENSION

FIG. 3

0034125

4/4

FIG. 4

**European Patent Office**

## EUROPEAN SEARCH REPORT

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | DE - A - 1 541 659 (TELEFUNKEN PATENTVERWERTUNG)<br><br>+ Fig. 4; page 2, line 5 - page 7, line 7; page 8, line 16 - page 9, line 3; page 20, line 9 - page 21, line 3; page 30, line 9 - page 35, line 19 +<br><br>-- | 1-3 | G 01 S 7/44 |
| | DE - A1 - 2 828 511 (LICENTIA PATENTVERWALTUNG)<br><br>+ Fig. 1; page 6, line 1 - page 9, line 23; page 12, line 10 - page 14, line 6 +<br><br>-- | 1-3 | TECHNICAL FIELDS SEARCHED (Int. Cl.³)<br><br>G 01 S 7/00<br>G 01 S 13/00<br>G 06 F 15/00 |
| | DE - A - 2 414 560 (EMPRASA NACIONAL ELCANO DE LA MARINA MERCANTE)<br><br>+ Claim 1 +<br><br>-- | 1 | |
| | US - A - 4 002 827 (NEVIN)<br><br>+ Fig. 2; column 3, line 51 - column 4, line 57 +<br><br>-- | 1 | |
| | DE - B - 1 591 294 (MITSUBISHI DENKI)<br><br>+ Claims 1,2 +<br><br>-- | 1 | CATEGORY OF CITED DOCUMENTS |
| | DE - B - 2 260 857 (LICENTIA PATENTVERWALTUNG)<br><br>+ Fig. 1,2; page 7, line 5 - page 14, line 13 +<br><br>-- | 1-3 | X: particularly relevant<br>A: technological background<br>O: non-written disclosure<br>P: intermediate document<br>T: theory or principle underlying the invention<br>E: conflicting application<br>D: document cited in the application<br>L: citation for other reasons |

&: member of the same patent family, corresponding document

| | | | |
|---|---|---|---|
| X | The present search report has been drawn up for all claims | | |
| Place of search | Date of completion of the search | Examiner | |
| VIENNA | 28-04-1981 | DRÖSCHER | |

EPO Form 1503.1 06.78

European Patent Office

| Category | DOCUMENTS CONSIDERED TO BE RELEVANT | | CLASSIFICATION OF THE APPLICATION (Int. Cl. ³) |
|---|---|---|---|
| | Citation of document with indication, where appropriate, of relevant passages | Relevant to claim | |
| | WISSENSCHAFTLICHE BERICHTE AEG-TELEFUNKEN, Band 42, Heft 1, 1969, Berlin<br><br>HEINZ EBERT "Automatische Erkennung von Flugzielen durch digitale Radarzielextraktion", pages 39-48<br><br>+ Page 39, section 1.2 - page 40, section 2; fig. 2 +<br><br>---- | 1 | |

TECHNICAL FIELDS SEARCHED (Int. Cl. ³)